# EUROPEAN PATENT APPLICATION

(11) **EP 4 734 224 A1**
(43) Date of publication of application: **29.04.2026**
(21) Application number: 25210960.8
(22) Date of filing: 24.10.2025
(51) Int. Cl.: H01M 10/48, A62C 3/07, B60L 50/60, H01M 50/204

(54) **AN EXTINGUISHING SYSTEM OF A BATTERY MODULE AND A METHOD THEREOF**

(30) Priority: 25.10.2024 GB 202415763
(71) Applicant: Mercedes-Benz Group AG, 70372 Stuttgart (DE)
(72) Inventor: Sathyanarayana, Sharath, 570022 Mysore (IN); Krishnan, Dhanush, 560043 Bengaluru (IN); Ravindran, Abhiram, 560066 Bangalore (IN)
(74) Representative: Hofstetter, Schurack & Partner

(57) **Abstract**

An extinguishing system **100** of a battery module **200** is disclosed. The system includes an extinguishing agent **110**, at least one consumable unit **120**, a plurality of sensors **130**. The plurality of sensors include a temperature sensor and a pressure sensor, at least one conducting element **140**, at least one connecting switch **141** and a control unit **300**. the control unit **300** is configured to determine the internal temperature value **Tᵢ** and the internal pressure value **Pᵢ** of the battery module based on the signals received from the plurality of sensors. The control unit is configured to selectively operate the at least one connection switch to transmit an electrical current C to the at least one consumable unit. The electrical current C heats the conducting element which in turn melts the unit, exposing the extinguishing agent into the entire inner volume of the battery module in a controlled manner.

## Description

### TECHNICAL FIELD

The present disclosure generally relates to the field of vehicles. Particularly, but not exclusively, the present disclosure relates to an extinguishing system of a battery module in the vehicle. Further embodiments of the present disclosure disclose various aspects of deploying/ exposing an extinguishing agent inside the battery module to prevent or extinguish fire in the battery module.

### BACKGROUND

Battery modules are used to store electrical energy and dissipate it for further use by a product. Battery modules are made by assembling battery cells in large amounts. Generally, the battery module consists of several cells, connectors, a Battery Management Unit, and a casing that encloses all these components in a sealed manner. In the current scenario, an Electric Vehicle (EV) utilises electrical charge from the battery module to drive an electric motor that in turn helps the vehicle to propel. The integration of battery modules in the EVs is generally done through stacking multiple battery modules in a stacking manner that leads to formation of battery pack of the EV.

Due to presence of battery modules in the vehicle, it is necessary to maintain an efficient functionality of the battery module while ensuring its safety too. This is because the battery module may face situations where the battery module may get unstable due to high temperatures and that may consequently lead to conditions of thermal propagation (TP). It may be noted that thermal propagation (TP) is a propagation of a thermal event and thermal runaway propagation (TRP) is triggering of thermal runaways in adjacent cells (or battery modules) due to the occurrence of a first (often so-called "trigger") runaway in a first cell in a battery module. In above-described situations, there exists a risk for the battery to become thermally unstable thereby ultimately leading to potential hazard of fire in the battery modules which may further be propagated to adjacently positioned battery modules in the battery pack. Such hazardous situations may harm passengers seated inside the vehicle, other vehicles in the vicinity and nearby environment if not controlled within appropriate time.

There exist conventional art(s) that disclose extinguishing mechanisms to handle fire-inducing situations inside battery module of a vehicle. For instance, the patent publication number US2023125689A1 ['689] discloses a battery arrangement with an extinguishing unit that uses a detonation mechanism to release extinguishing agent in form of aerosol inside a battery module. However, detonation mechanism is a complex phenomenon that requires use of explosive materials. The presence of explosive materials inside the battery module increases overall complexity of such arrangement present inside the battery module.

'689 discloses presence of detonation element for providing the detonation mechanism where the detonation element has an explosive or blasting agent that detonates from thermal energy of the battery when fire condition is present. Use of explosives and blasting agents inside a battery module increases risk associated with thermal stability of the battery module. Also, triggering a chemical reaction to achieve the detonation mechanism makes such extinguishing arrangements bulkier and more ardent monitoring is required to control such detonation mechanism. Also, conventionally fire extinguisher systems installed in a battery module rely only on either of temperature value inside the battery module or pressure value inside the battery module to assess occurrence of a thermal runaway inside the battery. However, relying only on one parameter to activate a fire extinguishing system inside a battery is not an economically advised practice since sometimes relying only on one parameter may inaccurately trigger the fire extinguishing system inside a battery module. Therefore, the conventional art(s) fails to address the one or more problems discussed in the background in a convenient, simplistic and efficient manner.

The present disclosure is directed to overcome one or more limitations stated above or other such limitations associated with the conventional art(s). The information disclosed in this background of the present disclosure section is only for enhancement of understanding of the general background of the invention and should not be taken as an acknowledgement or any form of suggestion that this information forms the conventional art/ prior art already known to a person skilled in the art.

### SUMMARY

One or more shortcomings of conventional systems are overcome, and additional advantages are provided through the mechanism as claimed in the present disclosure. Additional features and advantages are realized through the techniques of the present disclosure. Other embodiments and aspects of the disclosure are described in detail herein and are considered a part of the claimed/ present disclosure.

In a non-limiting embodiment of the present disclosure, an extinguishing system of a battery module is disclosed. The system includes a plurality of sensors, at least one consumable unit, at least one conducting element, at least one connecting switch, and a control unit. The plurality of sensors is positioned inside the battery module and configured to generate signals related to temperature and pressure inside the battery module. The plurality of sensors includes a temperature sensor and a pressure sensor. The at least one consumable unit is disposed inside the battery module and encloses an extinguishing agent. The at least one conducting element is connected to the at least one consumable unit.. The at least one connecting switch is electrically coupled with a HV (High Voltage) terminal of the battery module. The at least one connecting switch is adapted to facilitate transmission of an electrical current from the battery module to the at least one conducting element. The control unit is communicatively coupled to the plurality of sensors. The control unit is operatively coupled with the at least one connecting switch. The control unit is configured to determine an internal temperature value and an internal pressure value of the battery module, based on signals received from the plurality of sensors. The control unit is configured to selectively operate the connection switch to facilitate a connection between the HV terminal of the battery module and the conducting element, to transmit the electrical current to the at least one consumable unit, based on comparison between the determined internal temperature value and the determined internal pressure value with a preset threshold value of temperature and a preset threshold value of pressure respectively, in a pre-defined sequence.

In an embodiment of the present disclosure, the control unit is configured to operate connection switch to establish a connection between the HV terminal of the battery module and the conducting element, when the determined internal temperature and the determined internal pressure value are more than the preset threshold value of temperature and the preset threshold value of the pressure respectively.

In an embodiment of the present disclosure, the pre-defined sequence includes comparing the determined internal temperature value with the preset threshold value of the temperature and then comparing the determined pressure value with the preset threshold value of the pressure to determine if thermal propagation has occurred.

In an embodiment of the present disclosure, the at least one consumable unit is made from a polymeric material and the at least one consumable unit is disposed at an upper portion of the battery module. The at least one consumable unit is adapted to be attached to the upper portion of the battery module via one of, an adhesive bonding technique and a mechanical fastening technique.

In an embodiment of the present disclosure, the at least one conducting element is a wire-shaped structure made from one of, copper, silver, aluminium.

In an embodiment of the present disclosure, the preset threshold value of temperature and the preset threshold value of pressure are determined based on type of the battery module and volume of the battery module.

In another non-limiting embodiment of the present disclosure, an extinguishing method of a battery module is disclosed. The method includes generating signals related to internal temperature and internal pressure inside the battery module, by a plurality of sensors. The plurality of sensors include a temperature sensor and a pressure sensor. The method further includes determining the internal temperature and the internal pressure inside the battery module, based on signals received from the plurality of sensors, by the control unit. The method further includes determining if a thermal propagation has occurred in the battery module, based on comparison of the determined internal temperature and the determined internal pressure with a preset threshold value of temperature and a preset threshold value of pressure respectively, in a pre-defined sequence, by the control unit. The method further includes operating, selectively, at least one connecting switch, to establish a connection between a HV terminal of the battery module and an at least one conducting element, to transmit an electrical current from the battery module to the at least one conducting element, when thermal propagation is determined to have occurred inside the battery module, by the control unit. The method further includes heating, the at least one consumable unit, when the determined internal temperature value and the determined pressure value are more the preset threshold value of the temperature and the preset threshold value of the pressure respectively, to release an extinguishing agent inside the battery module to remove heat from the battery module, by the at least one conducting element.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF ACCOMPANYING DRAWINGS

The novel features and characteristics of the disclosure are set forth in the appended claims. The disclosure itself, however, as well as a mode of use, further objectives, and advantages thereof, will best be understood by reference to the following detailed description of an embodiment when read in conjunction with the accompanying drawings. One or more embodiments are now described, by way of example only, with reference to the accompanying drawings wherein like reference numerals represent like elements and in which:
**FIG. 1** illustrates a top view of a battery pack integrated with an extinguishing system, in accordance with an embodiment of the present disclosure;
**FIG. 2** illustrates a cut-sectional view of a battery module of the battery pack of **FIG. 1** taken along plane A-A;
**FIG. 3** illustrates a cut-sectional view of a battery module of the battery pack of **FIG. 1** taken along plane B-B;
**FIG. 4A** illustrates another cut-sectional view of a battery module of the battery pack of **FIG. 1** taken along plane A-A;
**FIG. 4B** illustrates a magnified view of a portion M of **FIG. 4A****;**
**FIG. 5** illustrates a perspective view of a portion of a consumable unit of an extinguishing system, in accordance with an embodiment of the present disclosure;
**FIG. 6** illustrates a schematic layout of an extinguishing system of the battery module of the battery pack of **FIG. 1****,** in accordance with an embodiment of the present disclosure;
**FIG. 7** illustrates a flow-diagram of an extinguishing method for the extinguishing system of **FIG. 6****,** in accordance with an embodiment of the present disclosure

The figures depict embodiments of the disclosure for purposes of illustration only. One skilled in the art will readily recognize from the following description that alternative embodiments of the apparatus illustrated herein may be employed without departing from the principles of the disclosure described herein.

### DETAILED DESCRIPTION

While the embodiments in the disclosure are subject to various modifications and alternative forms, specific embodiments thereof have been shown by way of example in the figures and will be described below. It should be understood, however, that it is not intended to limit the disclosure to the particular form disclosed, but on the contrary, the disclosure is to cover all modifications, equivalents, and alternatives falling within the scope of the disclosure.

It is to be noted that a person skilled in the art would be motivated from the present disclosure and modify various features of an extinguishing system and method of a battery module, without departing from the scope of the disclosure. Therefore, such modifications are considered to be part of the disclosure. Accordingly, the drawings show only those specific details that are pertinent to understand the embodiments of the present disclosure, so as not to obscure the disclosure with details that will be readily apparent to those of ordinary skilled in the art having benefit of the description herein. Also, the system of the present disclosure may be employed in battery modules of any kind of vehicles including commercial vehicles, passenger vehicles, and the like. However, neither the vehicle nor complete vehicle frame of the vehicle is illustrated in the drawings of the disclosure for the purpose of simplicity.

The terms "comprises...a", "comprising", or any other variations thereof used in the disclosure, are intended to cover a non-exclusive inclusions such that a system comprises a list of components does not include only those components but may include other components not expressly listed or inherent to such mechanism. In other words, one or more elements in mechanism proceeded by "comprises... a" does not, without more constraints, preclude the existence of other elements or additional elements in the system or device.

Embodiments of the present disclosure discloses an extinguishing system of a battery module. The system facilitates removal of heat from inside the battery module when the system detects elevation in pressure built-up inside the battery module. The system uses heat sensitive material to enclose an extinguishing agent. The heat sensitive material forming a unit can be melted by providing a pre-defined magnitude of current from the battery module itself, thereby deploying the extinguishing agent in the battery module for extinguishing effect.

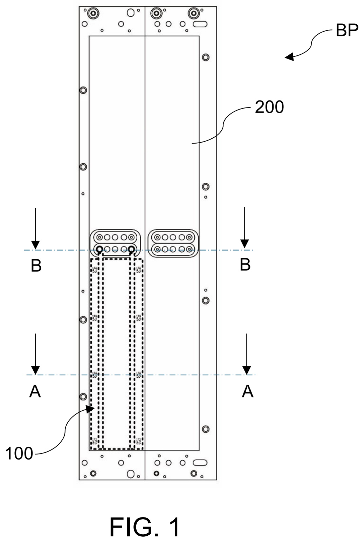

The following paragraphs describe the present disclosure with reference to **FIG. 1** to **FIG. 7****.** In the figure, the same element or elements which have similar functions are indicated by the same reference signs. With general reference to the drawings, an extinguishing system of a battery module in accordance with the teachings of preferred embodiments of the present disclosure is illustrated and generally identified with reference numeral **100** in the corresponding figures. In the figures, the vehicle having the extinguishing system **100** is depicted and is indicated by reference numeral **"100".** Other features and/or elements of the extinguishing system **100** of the battery module **200** are depicted by respective reference numeral [see list of reference numerals] in the corresponding figures and the same will be used corresponding to respective features henceforth. It will be understood that the teachings of the present disclosure are not limited to any particular vehicle.

The following detailed description is merely exemplary in nature and is not intended to limit application and uses. Furthermore, there is no intention to be bound by any theory presented in the preceding background or summary or the following detailed description. It is to be understood that the disclosure may assume various alternative orientations and step sequences, except where expressly specified to the contrary. It is also to be understood that the specific devices or components illustrated in the attached drawings and described in the following specification are simply exemplary embodiments of the inventive concepts defined in the appended claims. Hence, specific dimensions or other physical characteristics relating to the embodiments that may be disclosed are not to be considered as limiting, unless the claims expressly state otherwise. Hereinafter, preferred embodiments of the present disclosure will be descried referring to the accompanying drawings. While some specific terms directed to a specific direction will be used, the purpose of usage of these terms or words is merely to facilitate understanding of the present invention referring to the drawings. Accordingly, it should be noted that the meaning of these terms or words should not improperly limit the technical scope of the present invention.

Also, it is to be understood that the phraseology and terminology used herein is for description and should not be regarded as limiting. Unless specified or limited otherwise, the terms "accommodated," "mounted," "connected," "supported," and "coupled" and variations thereof are used broadly and encompass both direct and indirect mountings, connections, supports, and couplings. Further, "connected" and "coupled" are not restricted to physical or mechanical connections or couplings. It is to be understood that this disclosure is not limited to the specific devices, methods, applications, conditions, or parameters described and/or shown herein and that the terminology used herein is to describe particular embodiments by way of example and is not intended to be limiting of the claimed invention. Hereinafter in the following description, various embodiments will be described. For purposes of explanation, specific configurations and details are outlined to provide a thorough understanding of the embodiments. However, it will also be apparent to one skilled in the art that the embodiments may be practiced without the specific details. Furthermore, well-known features may be omitted or simplified in order not to obscure the embodiment being described. Henceforth, the extinguishing system **100** is elucidated in detail making reference to **FIG. 1** - **FIG. 7****.**

Referring to **FIG. 1****,** a portion of a battery pack **BP** of an electric vehicle (EV) (not shown explicitly) is illustrated. It is to be noted that the battery pack **BP** illustrated includes multiple battery modules **200** where each of the battery modules **200** is stacked and electrically coupled to each other. Each of the battery modules **200** consist of a number of battery cells connected in series or parallel, forming modules that produce the required voltage and energy capacity for the EV. Hence, the formation of battery module **200** is a final product, assembled as well in series preferably or in parallel within a hard housing (not shown explicitly). In accordance with some embodiments, the battery module **200** of the present disclosure may have its operation governed by a Battery Management Unit (BMU). In an embodiment, the battery management unit (BMU) may be understood as a controlling part of a battery management system (BMS). BMU may process data from all other BMS modules, make decisions to ensure the safety of the BMS, and communicate with the vehicle controller and drive contactors connecting the battery pack **BP** to the EV. The battery module **200** includes HV (High Voltage) terminals **240** to facilitate external flow of electrical power from the battery terminal. The terms "HV terminal" or the "terminal" may be used interchangeably throughout the present disclosure. The HV terminals **240** may be adaptable to be coupled with at least one connecting switch **141.** The connecting switch **141** facilitates selective flow of an electrical current **C** from the battery module **200.**

The battery module **200** of the present disclosure has an extinguishing system **100** for removal of heat from the battery module **200** in order to prevent occurrence of any thermal event such as thermal runaway propagation (TRP). The BMU may facilitate operation of extinguishing the battery module **200** when some stored parameters/conditions will be satisfied and fulfilled. Such aspects of the BMU are disclosed in later paragraphs of the present disclosure.

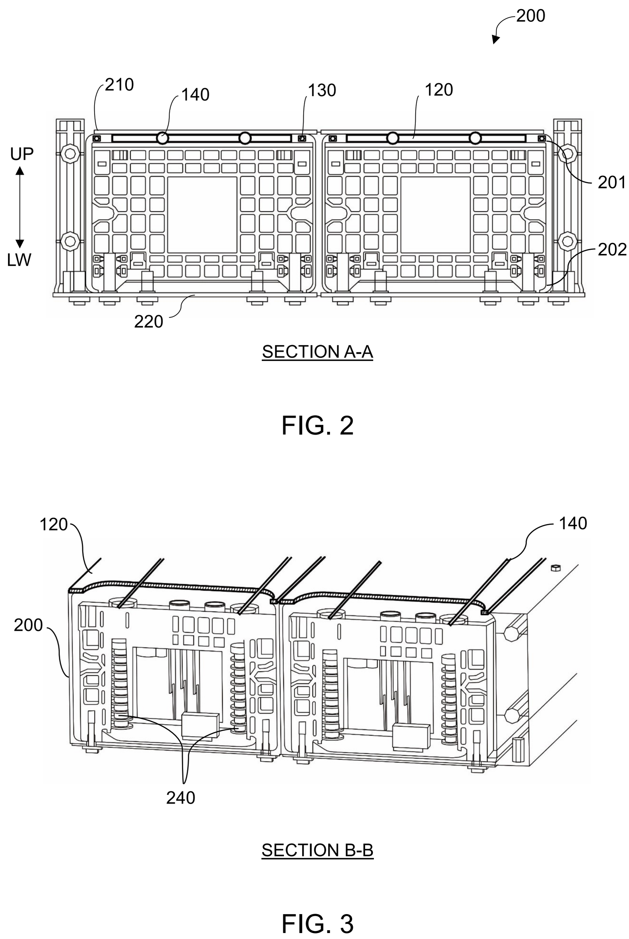

Referring to **FIG. 2****,** more structural and constructional aspects of the battery module **200** are disclosed in forthcoming embodiment. In a preferable embodiment, the battery module **200** can be understood as preferably a cuboidal-shaped housing that contains a plurality of battery cells (not shown explicitly). The battery module **200** throughout the present disclosure can also be referred to as "battery", and "module" interchangeably and be supplemented with the same reference numeral **"200"** for more clarity and simplicity. **FIG. 2** particularly illustrates a cut-sectional view along A-A of the battery module **200.** The battery module **200** has an upper portion **201** provisioned/oriented in an upward direction **UP.** The battery module **200** has a lower portion **202** being provisioned/oriented in a lower direction **LW.** For a fair and clear understanding of directions, a particle moving from upward direction **UP** to lower direction **LW** may be an indicative of movement of particle under gravity. An upper lid **210** and a lower lid **220** are positioned oppositely to each may act as enclosing members from the upper portion **201** and the lower portion **202** respectively.

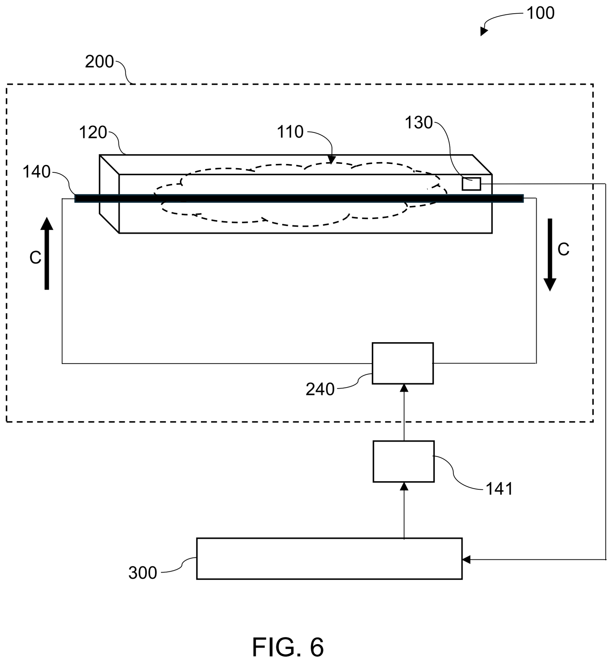

With reference to **FIG. 2** in conjunction with **FIG. 3****,** various aspects of the extinguishing system **100** and integration of its structural aspects with the disclosed configuration of the module **200** may now be disclosed. Throughout the present disclosure, the terms "extinguishing system" and "system" may be used interchangeably with be referred with the same reference numeral **"100".** The extinguishing system **100** includes a consumable unit **120** that is disposed inside the battery module **200.** Throughout the present disclosure, the feature "consumable unit" may also be referred as the "unit". The unit **120** contains or enclose an extinguishing agent **110** (best shown in **FIG. 6****).** In a preferable embodiment of the present disclosure, the at least one unit **120** is disposed inside the module **200** to ensure exposure and dispersion of extinguishing agent **110** at every corner of the module **200.** The unit **120** may preferably be disposed at an upper portion **201** of the module **200.** In a preferable embodiment, the unit **120** may be adapted to be attached to the upper portion **201** of the module **200,** and face interiors of the module **200,** i.e., battery cells. The unit **120** may preferably be attached to upper lid **210** of the module **200** from interior side via one of, adhesive bonding techniques, and mechanical fastening technique. For adhesion of the unit **120** on the upper lid **210** of the module **200,** the unit **120** may be made from a polymeric material and attached to the upper lid via an adhesive strip preferably an adhesive strip **120a.** In a preferable embodiment, the unit **120** may be made from a thermosensitive material or a heat-sensitive material that may be capable of burning and may preferably have self-consumable properties upon melting/ burning.

The purpose of having the thermosensitive material for the unit **120** comes from functionality intended by the unit **120.** The unit **120** enclosing the extinguishing agent **110** is adapted to melt and further expose the extinguishing agent **110** inside the module **200.** In an embodiment, the extinguishing agent **110** is a solid/dry chemical powder that may be a mixture of monoammonium phosphate and ammonium sulphate but not limited to the same. The extinguishing agent **110** allows removal of heat or reduction in heat inside the module **200** by starving the fire/spark of oxygen, which also stops the fire from reigniting as well. The exposure or dispersion of the extinguishing agent **110** in the module **200** is done to avoid or overcome situations that are indicative of preliminary scenarios of potential thermal events inside the module **200.**

Such thermal event scenarios are detected with a plurality of sensors **130.** In a preferable embodiment, the plurality of sensors may include a temperature sensor and a pressure sensor. The plurality of sensors **130** may be positioned/ disposed inside the module **200,** preferably at end corners of the module. The plurality of sensors **130** may be adapted to detect parameters such as internal temperature **Tᵢ** and internal pressure **Pᵢ** inside the battery module **200.** It is to be noted that term "internal pressure" indicates temperature inside the battery module **200** and term "internal temperature" indicates pressure inside the battery module **200.** In a preferable embodiment, the plurality of sensors **130** intend to generate signals relevant/ related to internal temperature **Tᵢ** and pressure inside the battery module **200.** The plurality of sensors **130** are communicatively coupled with a control unit **300** to send the relevant signals to the control unit **300.** Upon receiving the relevant signals, the control unit **300** determines the internal temperature **Tᵢ** and the internal pressure **Pᵢ** inside the module **200.** The control unit **300** is adapted to check and validate if the determined value of the internal temperature **Tᵢ** and the determined value of the internal pressure **Pᵢ** is above its respective preset value or threshold values **T_{threshold}**, **P_{threshold}**, to determine if thermal propagation is occurring inside the battery module **200.**

In an embodiment, the control unit **300** may be a centralized control module, or a dedicated control module. The control unit **300** may be implemented by any computing system that is utilized to implement the features of the present disclosure. The control unit **300** may include a processing module comprising at least one data processor for executing program components for executing user or system generated requests. The processing module may be a specialized processing module such as integrated system (bus) controllers, memory management control units, floating point units, graphics processing modules, digital signal processing modules, etc. The processing module may include a microprocessor, such as AMD Athlon, Duron or Opteron, ARM's application, embedded or secure processors, IBM PowerPC, Intel's Core, Itanium, Xeon, Celeron or other line of processors, etc. The processing module may be implemented using a mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

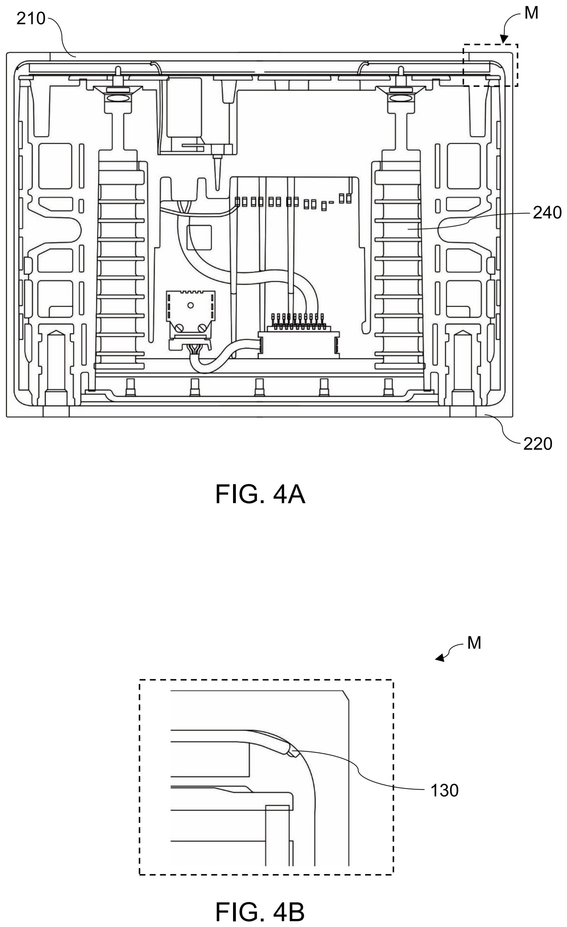

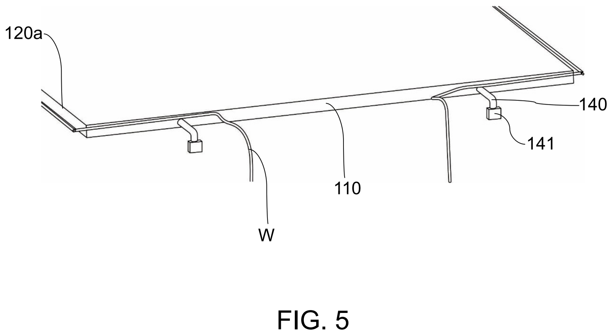

With reference to **FIG. 4A** - **FIG. 4B** in conjunction with **FIG. 5** - **FIG. 6****,** the control unit **300** operates the connecting switch **141** in a selective manner. The connecting switch **141** could be implemented either as a binary switch or a fuse that diffuses upon passing of the electrical current by the battery module **200.** The control unit **300** is configured to operate the connection switch **141** to selectively facilitate a connection between the HV terminals **240** of the battery module **200** and a conducting element **140.** In a preferable embodiment, the conducting element **140** makes surface contact with the unit **120** and not maintain any physical contact with extinguishing agent **110** enclosed. The conducting element **140** of the present disclosure is an electricity conducting wire-shaped structure. The conducting element **140** may be made from one of, copper, silver, and aluminium without limiting the scope of other materials that may be used as conducting element **140.** The control unit **300** to transmit the electrical current **C** to the at least one consumable unit **120,** based on comparison between the determined internal temperature value **Tᵢ** and the determined internal pressure value **Pᵢ** with a preset threshold value of temperature **T_{threshold}** and a preset threshold value of pressure **P_{threshold}** respectively.

The transmission of electrical current **C** from the pair of terminal poles **240** of the module **200** to the unit **120** may be facilitated via the at least one connecting switch **141** and the at least one conducting element **140.** The electrical current **C** is determined by the control unit using the mathematical formula H = I² * R * t, where H defines the heat generated when current **C**is passed from a wire/element having resistance R (in ohms) at a particular temperature for a pre-defined time t. Depending upon the type and volume of the battery, the parameter t may be generally considered as 1 second.

In an exemplary embodiment, for a specific battery module having the conducting element **140** made of a copper wire, firstly heat transfer rate of the conducting element is determined using the following equation: Q/t=kA([T1 - T2]/I), where k denotes thermal conductivity of the copper wire equivalent to 385W/mK , A denotes area of cross-section of the copper wire equivalent to 4*10⁻⁶ m², T1 denotes surrounding temperature of the copper wire equivalent to 500⁰ Celsius (323K) and T2 denotes desired temperature to melt the unit **120** (made of Polyethylene): T2 = 1150⁰ Celsius (388K). Hence, using the mentioned equation: Q = 385*4*10⁻⁶*(388-323)/0.3 = 0.167J of heat is required to be transferred for 1s to melt the unit **120.** Further, using this heat rate, the electrical current **C** is determined by the control unit **300** using the mathematical formula H = I² * R * t, where H defines the heat generated (0.167Joules) when current I is passed from the copper wire having a resistance R (in ohms) = .0015 ohms at a temperature of 50⁰ Celsius for a pre-defined time t of 1s. Hence the minimum electrical current I required from the battery module for the copper wire shall be 10.5 Ampere. The electrical current **C,** to be provided to the copper wire may ramp up to 11 Ampere, which could be the fusing threshold value for the fuse element.

The adequate amount of the electrical current, **C,** is determined by the control unit 300.The electrical current **C** could either be a fixed value or it can be modulated by the control unit **300** depending upon the type of conducting element used. In a generic configuration of the module **200,** the module **200** may have the pair of terminal poles **240.** In an alternate understanding, the pair of terminal poles **240** may be defined as electrical contacts used to connect a load or charger to a single cell or multiple-cell battery module. One terminal pole may be a positive (+) or Anode while the other terminal pole may be a negative (-) or Cathode. The action of flow of the electrical current **C** from these terminal poles **240** to the conducting element **140** may be determined and controlled by the control unit **300.**

In an embodiment, the control unit **300** may be communicatively coupled to the plurality of sensors **130** and also communicatively coupled with the battery management unit (BMU) (not shown explicitly). It may be noted that in the present disclosure, the control unit **300** and BMU may be more or less feature/ component, but not limited to the same. In the present disclosure, to maintain simplicity and clarity, both the BMU and the control unit **300** may be referred to as the same feature. The BMU and the control unit **300** may perform the same set of operations. Hence both of the terms like control unit and BMU may be used interchangeably throughout the present disclosure. Therefore, contrary to previous understanding, the BMU and/or control unit **300** being same feature may be operatively coupled to terminal poles **240** of the battery module **200** to drive functionality and working/ flow of the electrical current **C** from the terminal poles **240** of the module **200** to the conducting element 140. The control unit **300** being communicatively coupled with the plurality of sensors **130** may receive data indicative of pressure and temperature inside the module **200** in real-time or in dynamic convenience.

The control unit **300** may allow transmission of electrical current **C** from the terminal poles **240** to the conducting element **140** via operation of the connecting switch **141.** In a preferable embodiment, the preset threshold value of pressure **P_{threshold}** may be atmospheric pressure. In a preferable embodiment, the preset threshold value of pressure **P_{threshold}** may be proximal to atmospheric pressure. In some embodiments, the preset threshold value of pressure **P_{threshold}** and temperature **T_{threshold}** may act as a threshold value which is indicative of limiting value of the thermal runaway propagation (TPR), above which the TPR begins to occur in the battery module **200.** In a preferable embodiment, the preset threshold value of pressure **P_{threshold}** and temperature **T_{threshold}** varies as per the size, volume and geometry of the battery module **200.** If the determined internal pressure **Pᵢ** and the internal temperature **Tᵢ** inside the module **200** are above the pre-determined threshold values **P_{threshold}**, **P_{threshold}**, then the control unit **300** may initiate transmission of the electrical current **C** from the terminal poles **240** of the module **200** to the conducting element **140.** The unit **120** may be adapted to melt upon receiving heat from the conducting element **140** generated by a magnitude of electrical current **C** (pre-defined/calculated by the control unit) and expose the extinguishing agent **110** inside the module **200.**

In a preferable embodiment, the preset value/threshold for each of pressure and temperature in the module **200** may be subject to changes via a user-interface setup and hence the preset values may be changed depending on ambient conditions around the module **200.**

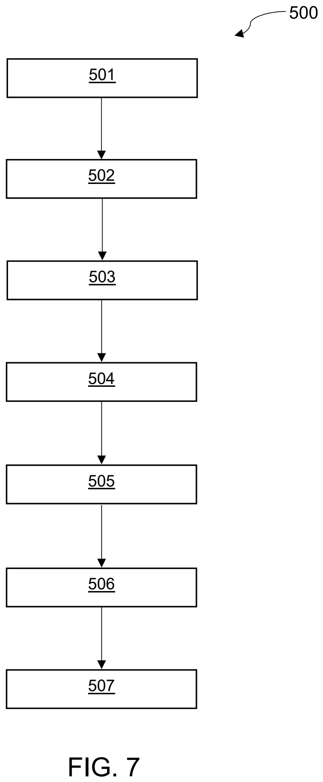

With reference to **FIG. 7****,** a flow diagram of a method **500** for the extinguishing system **100** through features and aspects of the system **100,** as described in earlier embodiments, is illustrated. The method **500** may include one or more steps for the detection and analysis of detected inputs by the plurality of sensors **130,** for further smart decision-making by the control unit **300** in analysis, and further operation of different components of the system **100** in a strategic manner. The method **500** may be described in the general context of computer-executable instructions. Generally, computer-executable instructions can include routines, programs, objects, components, data structures, procedures, units, and functions, which perform particular functions or implement particular abstract data types. The method **500** may employ features disclosed in previous embodiments of the present disclosure for a full-fledged application of the system **100,** as illustrated in **FIG. 4****.**

The order in which the method **500** is described is not intended to be construed as a limitation, and any number of the described method steps can be combined in any order to implement the method **500.** Additionally, individual steps may be deleted from the methods without departing from the scope of the subject matter described herein. Furthermore, the method **500** can be implemented in any suitable hardware, software, firmware, or combination thereof.

In a working embodiment of the system **100** through its methodology **500,** the plurality of sensors **130** may first detect internal temperature **Tᵢ** of battery module **200,** as shown in step **501.** In next step **502,** the control unit **300** determines if the determined internal temperature **Tᵢ** is greater than the preset threshold value of temperature **T_{threshold}** for the battery module **200.** If the Tᵢ < T_{threshold}, then control unit **300** keeps monitoring the temperature inside the battery module **200.** However, if **Tᵢ > T_{threshold}**, then the control unit **300** through step **503** determines the internal pressure **Pᵢ** inside the battery module **200.** Further in the step **504,** the control unit **300** determines if the internal pressure **Pᵢ** inside the battery module **200 is greater the preset threshold value of pressure P_{threshold}.** If the **Pᵢ** < **P_{threshold}**, then control unit **300** keeps monitoring the internal pressure of the battery module **200.** However, if **Pᵢ > P_{threshold}**, then the control unit **300** determines/ establishes that thermal propagation has occurred. Further, in step **505,** the control unit **300** operates the connecting switch **141** and establishes a connection between the HV terminal **240** of the battery module **200** and the conducting element **140** to transmit the electrical current **C** to the conducting element **140.** Due to the electrical current **C** in the conducting element **140,** the conducting element **140** starts melting the unit **120** so as to release the extinguishing agent **110** in the battery module **200** as shown in step **506.** Further, the extinguishing agent **110** operates in preferably following mode in the battery module **200:** spreading in battery volume to eliminate presence of oxygen in the battery, and surrounds and extinguish fire, if there is any, as shown in step **507.** Hence the proposed system **100** helps to prevent or extinguish fire in the battery module as mentioned in step **507.**

The extinguishing system **100** and the methodology **500** for operation/enablement of the system **100** allows avoiding of the thermal runaway propagation (TPR) or thermal propagation (TP) inside the module **200.** In a preferable embodiment, multiple conducting elements **140** such as Copper wires can be placed in contact with material of the unit **120** so that local heating of the unit **120** can be done, based on detected increment in pressure in a region inside the module **200.** This prevents the accidental actuation/ exposure of the extinguishing agent **110.** The system **100** of the present disclosure facilitates exposing the extinguishing agent **110** into the entire inner volume of the battery module **200** through heating generated by the electrical current **C** from the terminal poles **240** of the module **200.**

It is to be understood that a person of ordinary skill in the art may develop a system of similar configuration without deviating from the scope of the present disclosure. Such modifications and variations may be made without departing from the scope of the present invention. Therefore, it is intended that the present disclosure covers such modifications and variations provided they come within the ambit of the appended claims and their equivalents.

### EQUIVALENTS:

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or *two or more* recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances, where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

### LIST OF REFERENCE NUMERALS:

| | |
|---|---|
| Extinguishing system | **100** |
| Extinguishing agent | **110** |
| Unit | **120** |
| Adhesive strip | **120a** |
| Sensors | **130** |
| Conducting element | **140** |
| Connecting switch | **141** |
| Battery module | **200** |
| Upper portion | **201** |
| Lower portion | **202** |
| Upper lid | **210** |
| Lower lid | **220** |
| Terminal poles | **240** |
| Control unit | **300** |
| Methodology | **500** |
| Battery pack | **BP** |
| Electrical current | **C** |
| Lower direction | **LW** |
| Upward direction | **UP** |

## Claims

1. An extinguishing system **100** of a battery module **200,** the system **100** comprising:
a plurality of sensors **130** positioned inside the battery module **200** to generate signals related to internal temperature **Tᵢ** and internal pressure **Pᵢ** inside the battery module **200,** wherein the plurality of sensors **130** comprises a temperature sensor and a pressure sensor;
at least one consumable unit **120** disposed inside the battery module **200** and adapted to enclose an extinguishing agent **110,;**
at least one conducting element **140** connected to the at least one consumable unit **120;**
at least one connecting switch **141** electrically coupled with a HV (High Voltage) terminal **240** of the battery module **200** and the at least one conducting element **140** to facilitate transmission of the electrical current **C** from the battery module **200** to the at least one conducting element **140;**
a control unit **300** communicatively coupled with the plurality of sensors **130,** and the control unit **300** is operatively coupled with the at least one connecting switch **141,**
the control unit **300** is configured to determine the internal temperature value **Tᵢ** and the internal pressure value **Pᵢ** of the battery module **200** based on the signals received from the plurality of sensors **130,** the control unit **300** is configured to compare the determined internal temperature value **Tᵢ** and the determined internal pressure value **Pᵢ** with a preset- threshold value of temperature **T_{threshold}** and a preset threshold value of pressure **P_{threshold}** respectively,
the control unit **300** is configured to selectively operate the at least one connection switch **141** to facilitate a connection between the HV terminal **240** of the battery module **200** and the conducting element **140,** to transmit the electrical current **C** to the at least one consumable unit **120,** based on the comparison between the determined internal temperature value **Tᵢ** and the determined internal pressure value **Pᵢ** with a preset threshold value of temperature **T_{threshold}** and a preset threshold value of pressure **P_{threshold}** respectively, in a pre-defined sequence.

2. The system **100** as claimed in claim 1, wherein the control unit **300** is configured to operate the at least one connection switch **141** to establish a connection between the HV terminal **240** of the battery module **200** and the conducting element **140,** when the determined internal temperature value **Tᵢ** and the determined internal pressure value **Pᵢ** are more than the preset threshold value of the temperature **T_{threshold}** and the preset threshold value of the pressure **P_{threshold}** respectively.

3. The system **100** as claimed in claim 1, wherein the pre-defined sequence includes comparing the determined internal temperature value **Tᵢ** with the preset threshold value of the temperature **T_{threshold}** and then comparing the determined pressure value **Pᵢ** with the preset threshold value of the pressure **P_{threshold}** to determine if thermal propagation has occurred.

4. The system **100** as claimed in claim 1, wherein the at least one consumable unit **120** is made from a polymeric material and the at least one consumable unit **120** is disposed at an upper portion **201** of the battery module **200,** the at least one consumable unit **120** is adapted to be attached to the upper portion **201** of the battery module **200** via one of, an adhesive bonding technique and a mechanical fastening technique.

5. The system **100** as claimed in claim 1, wherein the conducting element **140** is a wire-shaped structure made from one of copper, silver, and aluminium.

6. The system **100** as claimed in claim 1, wherein the preset threshold value of temperature and the preset threshold value of pressure are determined based on type of the battery module **200** and volume of the battery module **200.**

7. An extinguishing method **500** of a battery module, the method **500** comprising:
generating, signals related to internal temperature **Tᵢ** and internal pressure **Pᵢ** inside the battery module **200,** by a plurality of sensors **130,** the plurality of sensors **130** comprises a temperature sensor and a pressure sensor;
determining, internal temperature value **Tᵢ** and the internal pressure value **Pᵢ** inside the battery module **200,** based on signals received from the plurality of sensors **130,** by a control unit **300**
determining, if a thermal propagation has occured in the battery module **200** based on comparison of the determined internal temperature **Tᵢ** and the determined internal pressure **Pᵢ** with a preset threshold value of temperature **T_{threshold}** and a preset threshold value of pressure **P_{threshold}** respectively, by the control unit **300;**
operating, selectively an at least one connection switch **141** to establish a connection between a HV terminal **240** of the battery module **200** and an at least one conducting element **140,** to transmit an electrical current **C** from the battery module **200** to the at least one conducting element **140;** and
heating, the at least one consumable unit **120,** based on comparison between the determined internal temperature value **Tᵢ** and the determined internal pressure value **Pᵢ** with a preset- threshold value of temperature **T_{threshold}** and a preset threshold value of pressure **P_{threshold}** respectively, in a pre-defined sequence, to release an extinguishing agent **110** inside the battery module **200** to remove heat from the battery module **200,** by the at least one conducting element **140.**

8. The method **500** as claimed in claim 7, wherein the pre-defined sequence includes comparing the determined internal temperature value **Tᵢ** with the preset threshold value of the temperature **T_{threshold}** and then comparing the determined pressure value **Pᵢ** with the preset threshold value of the pressure **P_{threshold}** to determine if thermal propagation has occurred.

9. The method **500** as claimed in claim 7 wherein the preset threshold value of temperature and the preset threshold value of pressure are determined based on type of the battery module **200** and volume of the battery module **200.**

10. An electric vehicle comprising an extinguishing system **100** as claimed in claim 1.
